# EUROPÄISCHE PATENTSCHRIFT

(11) **EP 3 583 064 B1**
(45) Veröffentlichungstag und Bekanntmachung des Hinweises auf die Patenterteilung: **19.01.2022**
(21) Anmeldenummer: 18703300.6
(22) Anmeldetag: 02.02.2018
(51) Int. Cl.: B67C 3/00, B65G 45/22, B65G 45/24

(54) **FÜLLMASCHINE UND VERFAHREN ZUM FÜLLEN VON PACKUNGEN MIT EINEM FLIESSFÄHIGEN PRODUKT**
FILLING MACHINE AND METHOD FOR FILLING PACKAGES WITH A FLUID PRODUCT
MACHINE DE REMPLISSAGE ET PROCÉDÉ DE REMPLISSAGE D'EMBALLAGES AVEC UN PRODUIT FLUIDE

(30) Priorität: 15.02.2017 DE 102017103040
(43) Veröffentlichungstag der Anmeldung: 25.12.2019
(73) Patentinhaber: SIG Technology AG, 8212 Neuhausen am Rheinfall (CH)
(72) Erfinder: BISCHOFF, Joerg, 52441 Linnich (DE); BRUNK, Barbara, 21398 Neetze (DE); GEISSLER, Hanno, 47802 Krefeld (DE); HANSEN, Dirk, 52441 Linnich (DE); OTT, Frank, 41464 Neuss (DE)
(74) Vertreter: Cohausz & Florack
(86) Internationale Anmeldenummer: PCT/EP2018/052612
(87) Internationale Veröffentlichungsnummer: WO 2018/149660

(56) Entgegenhaltungen:
- WO-A1-01/05658
- DE-U1-202008 009 165
- US-A- 4 960 200
- US-A- 6 050 391

## Beschreibung

Die Erfindung betrifft eine Füllmaschine zum Füllen von Packungen mit fließfähigen

Produkten gemäß dem Oberbegriff des Anspruchs 1 und wie aus der WO 01/05658 A1 bekannt. Ferner betrifft die Erfindung ein Verfahren zum Füllen von Packungen mit fließfähigen Produkten mit einer derartigen Füllmaschine.

Es sind bereits unterschiedliche Füllmaschinen zum Füllen von einseitig offenen Packungen mit Produkten, insbesondere in Form von Lebensmitteln, bekannt. Durch entsprechende Füllmaschinen werden die Packungen vorzugsweise mit fließfähigen Lebensmitteln gefüllt. Als Packungen werden insbesondere Packungen verwendet, die an einer Oberseite offen sind, um eine Öffnung zum Füllen der Packungen bereitzustellen. Die Packungen können beispielsweise Kartonverbundpackungen sein, die aus einem Packstoff in Form eines Laminats umfassend eine Kartonschicht und äußeren, insbesondere thermoplastischen, Kunststoffschichten, etwa aus Polyethylen (PE), gebildet sind. Der Karton verleiht den Packungen eine ausreichende Stabilität, damit die Packungen einfach gehandhabt und beispielsweise gestapelt werden können. Die Kunststoffschichten schützen den Karton vor Feuchtigkeit und erlauben ein Siegeln des Packstoffs zur Bildung einer dichten Packung. Zusätzlich können noch weitere Schichten, wie etwa eine Aluminiumschicht, vorgesehen sein, die eine Diffusion von Sauerstoff und anderen Gasen durch die Packung verhindern.

Das Füllen der Packungen mit Lebensmitteln erfolgt typischerweise unter sterilen Bedingungen. Dabei ist nicht nur das abzufüllende Lebensmittel, sondern auch die Packung zu sterilisieren. Dazu werden die Lebensmittel normalerweise für eine bestimmte Zeitspanne erhitzt. Die Packungen werden zunächst meist mit steriler Heißluft ausgeblasen. In die so aufgeheizten Packungen wird dann ein Sterilisierungsmittel eingeleitet, das typischerweise Wasserstoffperoxid ist oder wenigstens aufweist. Da die Packung vorgeheizt ist, werden hohe Reaktionsgeschwindigkeiten bei der Sterilisierung erreicht und vermieden, dass sich Kondensat in der Packung bildet. Feuchtigkeit und restliches Wasserstoffperoxid werden anschließend durch Trocknen der Packung mit, vorzugsweise heißer und steriler, Trocknungsluft aus der Packung entfernt. Sodann erfolgt das Füllen der sterilen Packung mit dem ebenfalls sterilen Produkt, das vorwiegend fließfähig, insbesondere flüssig ist. Entsprechende Produkte sind typischerweise Lebensmittel, wie etwa Säfte, Milch, Soßen und dergleichen. Nachdem die Packungen gefüllt sind, werden diese noch unter steriler Atmosphäre verschlossen.

Während des Sterilisierens und/oder des Füllens können die Packungen kontinuierlich, bedarfsweise mit konstanter Geschwindigkeit, durch die Füllmaschine transportiert werden. Häufiger werden die Packungen jedoch taktweise, also schrittweise, durch die Füllmaschine bewegt. Dabei können die Packungen nacheinander jeweils für eine bestimmte Zeitspanne bestimmte Positionen einnehmen, in denen die Packungen stillstehend über wenigstens eine Düse mit Heißluft, Sterilisierungsmittel und/oder Trocknungsluft beaufschlagt bzw. mit dem abzufüllenden Produkt gefüllt werden können.

Dem gezielten Transport der Packungen durch die Füllmaschine dient eine Transporteinrichtung, die eine Reihe von umlaufend bewegbaren Zellen aufweist. In einem Zuführbereich werden die Packungen von einer Zuführeinrichtung nacheinander in die hintereinander angeordneten Zellen übergeben. Die Packungen werden dann in den Zellen durch einen Füllbereich zu einem Abgabebereich bewegt, währenddessen die Packungen wie beschrieben sterilisiert, befüllt und verschlossen werden. Im Abgabebereich werden die Packungen dann über eine entsprechende Abgabeeinrichtung abgegeben. Die nun leeren Zellen werden dann über einen Rückführbereich zum Zuführbereich zurückbewegt, um dort wieder zu füllende, insbesondere einseitig offene, Packungen aufnehmen zu können. Typischerweise sind der Füllbereich und der Rückführbereich etwa geradlinig ausgebildet, während dazwischen Umlenkbereiche vorgesehen sind, in den die Transportrichtung der Zellen umgekehrt wird. Die Zuführeinrichtung und die Abgabeeinrichtung sind dabei aus Platzgründen typischerweise den Umlenkbereichen zugeordnet.

Um einen störungsfreien Betrieb aufrechtzuhalten und die Packungen nicht zu beeinträchtigen, wird die Transporteinrichtung inklusive der Zellen gekühlt. Zu diesem Zweck wird die Transporteinrichtung im Rückführbereich mittels Düsen mit Kühlwasser bespritzt. Dadurch wird an den Zellen anhaftender Schutz wenigstens teilweise entfernt, sodass eine Ansammlung von Schmutz während des Betriebs in vielen Fällen vermieden werden kann.

Spritzer von hochviskosen Produkten, wie beispielsweise Soßen, können jedoch sehr haftstarke Verschmutzungen der Transporteinrichtung und der Zellen bilden, die vom Kühlwasser der Zellenkühlung nicht effektiv genug entfernt werden. Daher können sich entsprechende Verunreinigungen ansammeln und das Wachstum von Mikroorganismen begünstigen. Dies kann dazu führen, dass das Produkt in den Packungen durch den Eintrag von Mikroorganismen kontaminiert wird. Die Packungen weisen dann eine verminderte Qualität auf, da die abgefüllten Produkte schneller als gewünscht verderben. Selbst wenn es nicht zu einer Kontamination des abgefüllten Produkts kommt, so können die Packungen an ihrer Außenseite so stark verschmutzt werden, dass die Packungen nach dem Verlassen der Füllmaschine gereinigt werden müssen. Dies ist jedoch aufwendig und kostenintensiv, zumal die Packungen zum Zwecke der Umverpackung trocken sein müssen. Im Übrigen können die Packungen bei der Reinigung beschädigt werden.

Alle bisherigen Versuche, der bestehenden Problematik hinreichend Rechnung zu tragen, etwa indem die Zellenkühlung so intensiviert wird, dass die Transporteinrichtung besser gereinigt werden kann, haben nicht zu zufriedenstellenden Ergebnissen geführt. Dies liegt beispielsweise an dem geringen zur Verfügung stehenden Bauraum und/oder daran, dass bei der Reinigung der Transporteinrichtung sekundäre Anlagenteile der Füllmaschine verschmutzt werden und/oder dass es trotzdem zu einem Eintrag von Mikroorganismen in die Packungen kommt. Dies kann etwa die Folge von Spritzern oder unkontrolliert ablaufender Flüssigkeit bei der Reinigung der Transporteinrichtung sein.

Daher liegt der vorliegenden Erfindung die Aufgabe zugrunde, die Füllmaschine und das Verfahren jeweils der zuvor genannten und näher beschriebenen Art derart auszugestalten und weiterzubilden, dass eine platzsparende und konstruktiv einfache Anordnung der Reinigungseinrichtung bereitgestellt werden kann, die gleichzeitig eine Verringerung einer unerwünschten Verteilung der Verunreinigungen erlaubt.

Diese Aufgabe ist durch eine Füllmaschine nach Anspruch 1 gelöst.

Zudem ist die genannte Aufgabe durch ein Verfahren zum Füllen von Packungen mit fließfähigen Produkten mit einer Füllmaschine gemäß Anspruch 9 gelöst.

Die Erfindung beruht auf der Reinigung der Transporteinrichtung mit einer Reinigungsflüssigkeit, die über wenigstens eine Düse so intensiv gegen die Transporteinrichtung gespritzt wird, dass die Verunreinigungen von der Transporteinrichtung entfernt werden. Gleichzeitig wird aber eine Verschmutzung sekundärer Anlagenteile durch die Verwendung einer Spritzwand vermieden. Unter sekundären Anlagenteilen werden dabei insbesondere andere Anlagenteile als die Transporteinrichtung verstanden, die zudem nicht dazu vorgesehen sind, mit den entfernten Verunreinigungen in Kontakt zu kommen. Somit werden beispielsweise Abwasserleitungen, Auffangwannen, Abwassersammelbehälter und dergleichen nicht als sekundäre Anlagenteile angesehen. Es wird also durch die Spritzwand vermieden, dass die Verschmutzungen von der Transporteinrichtung entfernt werden und dabei andere Anlagenteile verunreinigen, an denen Verunreinigungen unerwünscht sind. Um sicherzustellen, dass alle Bereiche oder wenigstens alle relevanten Bereiche der Transporteinrichtung mittels der Reinigungsflüssigkeit gereinigt werden, wird die Düse vorzugsweise so eingestellt sein, dass wenigstens ein Teil der von der wenigstens einen Düse verspritzten Reinigungsflüssigkeit die Transporteinrichtung passiert. Dieser Teil der Reinigungsflüssigkeit trifft dann wenigstens teilweise auf die Spritzwand auf, die die Reinigungsflüssigkeit auf diese Weise auffängt. Zudem leitet die Spritzwand durch ihre Anordnung und Ausrichtung die aufgefangene Reinigungsflüssigkeit gezielt so ab, dass eine Verunreinigung sekundärer Anlagenteile verhindert wird.

Damit die Transporteinrichtung in der gewünschten Weise gereinigt, also von Verschmutzungen befreit wird, trifft ein nicht unerheblicher Teil der von der wenigstens einen Düse verspritzten Reinigungsflüssigkeit mit hoher Geschwindigkeit auf die Transporteinrichtung auf. Dadurch gelingt es, die an der Transporteinrichtung anhaftenden Verschmutzungen von der Transporteinrichtung zu lösen und sodann zu entfernen. Die Geschwindigkeit der verspritzten Reinigungsflüssigkeit ist beispielswiese abhängig von der verwendeten Düse und von der Art der Verschmutzung. Es wird jedoch regelmäßig so sein, dass ein Teil der auf die Transporteinrichtung auftreffenden Reinigungsflüssigkeit von der Transporteinrichtung abgelenkt wird und wenigstens teilweise in der Richtung, in der die Transporteinrichtung von der wenigstens einen Düse angespritzt wird, wieder von der Transporteinrichtung wegspritzt. Auch dieser Teil der Reinigungsflüssigkeit wird von der Spritzwand aufgefangen, und zwar ohne sekundäre Anlagenteile zu verschmutzen abgeleitet, was wiederum durch die Anordnung und die Ausrichtung der Spritzwand sichergestellt wird. Zudem ist die Düse so zur Transporteinrichtung angeordnet und ausgerichtet, dass die von der Transporteinrichtung aufgefangene Reinigungsflüssigkeit ohne Verschmutzung sekundärer Analgenteile abtropfen kann.

Um dies zu erreichen, sind die wenigstens eine Düse und die wenigstens eine Spritzwand auf gegenüberliegenden Seiten der Transporteinrichtung und einander gegenüberliegend angeordnet. Die Düse ist dabei in ihrer Strahlrichtung auf die Spritzwand ausgerichtet, von der die Reinigungsflüssigkeit gezielt und unter Umgehung sekundärer Anlagenteile abgeleitet werden kann.

Bei der Reinigungsflüssigkeit kann es sich in einem besonders einfachen Fall um Wasser handeln. Um die Reinigungswirkung der Reinigungsflüssigkeit zu steigern, kann die Reinigungsflüssigkeit alternativ oder zusätzlich erwärmt sein. Besonders effektiv sind dabei Temperaturen größer 30°C, vorzugsweise größer 40°C, insbesondere größer 50°C. Dabei kann es zur Schonung der Packungen gleichzeitig oder alternativ bevorzugt sein, wenn die Temperatur der Reinigungsflüssigkeit eine Temperatur von 60°C, bedarfsweise von 50°C nicht überschreitet. Unabhängig von der Temperatur und der Art der Reinigungsflüssigkeit kann diese mit sogenannten Netzmitteln versetzt sein. Netzmittel sind dabei Tenside, die nicht die Vermischung zweier Phasen, sondern die Herabsetzung der Grenzflächenspannung zwischen der Transporteinrichtung und der Reinigungsflüssigkeit fördern sollen. So kann die Reinigungsflüssigkeit besser abfließen. Zudem kann die Reinigungsflüssigkeit aber bedarfsweise auch mit Reinigungsmitteln, insbesondere Tensiden, versetzt sein, die die Schmutzpartikel einschließen so letztlich eine Dispersion aus Schmutzpartikeln und Reinigungsflüssigkeit bilden.

Gute Reinigungsergebnisse wurden zudem erzielt, wenn die Reinigungsflüssigkeit mit einem Überdruck von 1 bar bis 10 bar an der wenigstens einen Düse ansteht. Besonders bevorzugt ist dabei ein Überdruck von bis zu 4 bar, insbesondere 3 bar, um ein übermäßiges Vernebeln der verspritzten Reinigungsflüssigkeit zu vermeiden. Dies führt zu unerwünschten Nebeneffekten und reduziert die Reinigungskraft. Zudem handelt es sich bei der wenigstens einen Düse für einen effizienten Einsatz der Reinigungsflüssigkeit bei gleichzeitig guter Reinigungsleistung vorzugsweise um eine Schlitzdüse, die für einen großen Reinigungsbereich senkrecht zur Transportrichtung der Transporteinrichtung ausgerichtet sein kann.

Wenn vorliegend von der Reinigung der Transporteinrichtung gesprochen wird, ist hierbei insbesondere eine Reinigung der Zellen der Transporteinrichtung gemeint. Es ist unschädlich und bedarfsweise auch gewünscht, wenn die gesamte Transporteinrichtung gereinigt wird. Wenn die Transporteinrichtung jedoch nur teilweise gereinigt wird, ist es bevorzugt, wenn der gereinigte Teil der Transporteinrichtung wenigstens einen Teil der Zellen der Transporteinrichtung umfasst. Dies beruht auf dem Umstand, dass die Zellen die Packungen aufnehmen und die Zellen im ungereinigten Zustand die Packungen leicht verschmutzen können.

Zusätzlich zu der Reinigung der Transporteinrichtung kann bedarfsweise noch eine Kühlung der Transporteinrichtung vorgesehen sein. Dies ist insbesondere dann der Fall, wenn sich durch die Reinigung der Transporteinrichtung keine ausreichende Kühlung der Transporteinrichtung sicherstellen lässt. Der Einfachheit halber kann die Kühlung der Transporteinrichtung ebenfalls durch Bespritzen mit einer Flüssigkeit, insbesondere Wasser, erfolgen. Da hierbei jedoch keine hohen Geschwindigkeiten der verspritzen Kühlflüssigkeit erforderlich sind, ist auch keine Spritzwand erforderlich.

Bei den Packungen handelt es sich vorliegend vorzugsweise um Laminatpackungen, die aus Packstofflaminaten gebildet werden. In einem besonders bevorzugten Fall handelt es sich um Kartonverbundpackungen aus einem Packstofflaminat umfassend wenigstens eine Kartonschicht, vorzugsweise wenigstens eine Barriereschicht, etwa bestehend aus Aluminium, Polyamid und/oder einem Ethylen-Vinylalkohol, und äußeren Schichten aus einem thermoplastischen Kunststoff, insbesondere Polyethylen (PE).

Die Längsränder eines aus dem Packstofflaminat gebildeten Packstoffzuschnitts werden miteinander zu einem sogenannten Packungssleeve oder Packungsmantel gesiegelt. Eines der offenen Enden des Packungsmantels kann zur Bildung eines Packungsbodens zusammengefaltet und gesiegelt werden. Durch die verbliebene Öffnung kann dann die so hergestellte, einseitig offene Packung in der Füllmaschine mit dem gewünschten Produkt gefüllt werden. Nach dem Füllen kann das noch offene Ende des Packungsmantels ebenfalls durch Falten und Siegeln zu einem Packungskopf verschlossen werden. Bedarfsweise können vorliegend auch der Packungskopf und der Packungsboden verstauscht sein. Dann wird zunächst der Packungskopf geschlossen und die Packung über den Packungsboden gefüllt. Das Verfahren zum Füllen und die Füllmaschine selbst ändern sich dadurch bezogen auf den Gegenstand der vorliegenden Erfindung nicht oder wenigstens nicht nennenswert.

Der besseren Verständlichkeit halber und zur Vermeidung unnötiger Wiederholungen werden vorliegend die Füllmaschine und das Verfahren zum Füllen der Packungen gemeinsam beschrieben, ohne jeweils im Einzelnen zwischen der Füllmaschine und dem Verfahren zu unterscheiden. Für den Fachmann ergibt sich jedoch anhand des Kontextes welches Merkmal jeweils für die Füllmaschinen und/oder das Verfahren bevorzugt ist.

Bei einer erfindungsgemäßen Ausgestaltung der Füllmaschine und des Verfahrens sind die wenigstens eine Düse und die wenigstens eine Spritzwand einem gemeinsamen Umlenkbereich der Transporteinrichtung zugeordnet. Dies erlaubt nicht nur ein platzsparendes Verspritzen der Reinigungsflüssigkeit über die wenigstens eine Düse und/oder das Auffangen und Ableiten der Reinigungsflüssigkeit über die wenigstens eine Spritzwand. Zugleich ist auch eine konstruktiv einfache Anordnung der wenigstens einen Düse und/oder der wenigstens einen Spritzwand sowie ein einfaches Ableiten der aufgefangenen Reinigungsflüssigkeit möglich. Insbesondere ist es in einfacher Weise möglich, die Transporteinrichtung schräg mit Reinigungsflüssigkeit zu bespritzen und die Reinigungsflüssigkeit nach unten abzuleiten, ohne dass die abgeleitete und Verunreinigungen aufweisende Reinigungsflüssigkeit mit der von der wenigstens einen Düse in Richtung der Transporteinrichtung gespritzten Reinigungsflüssigkeit in Kontakt kommt. Dadurch wird eine unerwünschte Verteilung der Verunreinigungen in der Füllmaschine vermieden.

Zusätzlich ist es bevorzugt, wenn die wenigstens eine Düse die Reinigungsflüssigkeit wenigstens im Wesentlichen horizontal gegen die Transportrichtung spritzt. So wird einfach und effektiv vermieden, dass die von der Düse auf die Transporteinrichtung gespritzte Reinigungsflüssigkeit mit der von der Transporteinrichtung abtropfenden Reinigungsflüssigkeit kollidiert. Hinzu kann die wenigstens eine Düse dann platzsparend und wenig störend angeordnet werden. Noch zweckmäßiger kann es dabei sein, wenn die Düse die Reinigungsflüssigkeit wenigstens teilweise nach oben in Richtung der Transporteinrichtung verspritzt. Dies dient einerseits einer besseren Reinigung der Transporteinrichtung, da so die Flächen der Zellen besser von der Reinigungsflüssigkeit erreicht werden und zudem die Reinigungsflüssigkeit besser in die Zellen hineingespritzt werden kann. Insbesondere für die Fälle, in denen die wenigstens eine Düse die Reinigungsflüssigkeit in einem Winkel zwischen 5° und 35°, insbesondere zwischen 5° und 20° zur Längsachse der Zellen auf die Zellen spritzt, ergeben sich gute Reinigungsleistungen. Die Längsachse der Zellen ist dabei vorzugsweise parallel zu der Richtung ausgerichtet, in die die Packungen in die Zellen und/oder aus den Zellen heraus geschoben werden. Dabei kann die Reinigungsflüssigkeit alternativ oder zusätzlich in der Laufrichtung der Zellen und/oder entgegen der Laufrichtung der Zellen gegen die Zellen gespritzt werden. So werden die Flächen der Zellen besser erreicht. Beim Spritzen der Reinigungsflüssigkeit in die Laufrichtung der Zellen werden insbesondere die entgegen die Laufrichtung weisenden Flächen bespritzt, während beim Spritzen der Reinigungsflüssigkeit gegen die Laufrichtung insbesondere die in die Laufrichtung weisenden Flächen bespritzt werden.

Um Bauraum zu sparen und den konstruktiven Aufwand zu senken, bietet es sich an, wenn die Spritzwand als Spritzblech ausgebildet ist. Dies hat zudem den Vorteil, dass die Spritzwand bedarfsweise einfach in die gewünschte Form gebogen werden kann. Dabei ist es zur Ableitung der Reinigungsflüssigkeit nach unten grundsätzlich besonders zweckmäßig, wenn wenigstens der der Düse zugewandte bzw. der von der Düse mit Reinigungsflüssigkeit angespritzte Teil der Spritzwand wenigstens teilweise, insbesondere überwiegend, nach unten weist. Dabei weist die Spritzwand oder der entsprechende Teil der Spritzwand überwiegend nach unten, wenn die hierfür relevante Fläche der Spritzwand bzw. die Tangente an diese Fläche einen Winkel von kleiner 45° zur Horizontalen einschließt. Dabei ist es nicht erforderlich, dass die Spritzwand oder die entsprechende Fläche der Spritzwand eben ausgebildet ist. Die Spritzwand oder die entsprechende Fläche der Spritzwand kann vorzugsweise gekrümmt, und zwar insbesondere konvex, ausgebildet sein. Das spart besonders im Bereich der Umlenkung knappen Bauraum ein und ermöglicht eine nachträgliche Veränderung der Spritzrichtung der wenigstens einen Düse, ohne dass die Reinigungsflüssigkeit durch die Spritzwand zu sehr zur Seite abgelenkt bzw. reflektiert wird. Aus hygienischen Gründen ist die Spritzwand vorzugsweise aus Edelstahl hergestellt.

Zur einfachen und zuverlässigen Ableitung von Reinigungsflüssigkeit und von Schmutzpartikeln bietet es sich insbesondere an, wenn unter der Spritzwand eine Bodenwanne zum Auffangen von verschmutzter Reinigungsflüssigkeit angeordnet ist. Konstruktiv einfach ist diese Lösung zu realisieren, wenn die Bodenwanne unter der Transporteinrichtung angeordnet ist. Dort steht einerseits mehr Platz zur Verfügung. Andererseits kann die von der Spritzwand abgeleitete, insbesondere von der Spritzwand reflektierte bzw. abgelenkte und/oder die von der Spritzwand nach unten abtropfende Reinigungsflüssigkeit gelöste Verunreinigungen von der Transporteinrichtung waschen und in die Bodenwanne ableiten. Die Reinigungsflüssigkeit kann also wenigstens zweifach zur Reinigung der Transporteinrichtung genutzt werden. Dabei ist es besonders zweckmäßig, wenn die Richtung, in der die Reinigungsflüssigkeit von der wenigstens einen Düse verspritzt wird und die Richtung, in die die von der Spritzwand aufgefangene Reinigungsflüssigkeit reflektiert bzw. abgelenkt oder abtropft, deutlich unterschiedlich sind. So kann die erstgenannte Richtung beispielsweise wenigstens im Wesentlichen horizontal und die zweitgenannte Richtung beispielweise wenigstens im Wesentlichen vertikal verlaufen. So reinigt bedarfsweise die von der Düse kommende Reinigungsflüssigkeit die Transporteinrichtung von der Außenseite, während die von der Spritzwand reflektierte bzw. abgelenkte oder abtropfende Reinigungsflüssigkeit die Transporteinrichtung von der Innenseite der Transporteinrichtung reinigt. Es ist also bevorzugt, dass wenigstens ein Teil der von der Düse auf die Spritzwand gerichteten Reinigungsflüssigkeit von der Spritzwand in Strahlform reflektiert wird, um die Zellen auch von ihrer Rückseite zweckmäßig zu reinigen. Alternativ oder zusätzlich zu der reflektierten Reinigungsflüssigkeit kann die entsprechende Reinigung auch durch von der Spritzwand abtropfende Reinigungsflüssigkeit übernommen werden.

Eine effektive Ableitung der Reinigungsflüssigkeit von der Spritzwand einerseits und bedarfsweise eine gute Reinigung der Transporteinrichtung von deren Innenseite kann beispielsweise erreicht werden, wenn die Neigung und/oder die Krümmung der der Düse zugewandten Seite der Spritzwand und die Spritzrichtung der wenigstens einen Düse so aufeinander abgestimmt sind, dass die Reinigungsflüssigkeit wenigstens im Wesentlichen in vertikaler Richtung von der Spritzwand reflektiert wird. In dieser Richtung sind typischerweise keine Anlagenteile vorgesehen, deren Verschmutzung zu einer nennenswerten Beeinträchtigung des Betriebs der Füllmaschine führen würde. Außerdem wird ein Abwaschen der Transporteinrichtung von oben durch die Schwerkraftrichtung begünstigt. Dabei ist es nicht zwingend erforderlich, dass die Reinigungsflüssigkeit genau in vertikaler Richtung reflektiert wird. Es kann beispielsweise ausreichen, wenn der Winkel zur Vertikalen kleiner als 10°, insbesondere kleiner als 5°, beträgt. Es versteht sich, dass die Reinigungsflüssigkeit nicht in gleicher Weise von der Spritzwand reflektiert wird, wie dies bei festen, insbesondere kugelförmigen, Partikeln der Fall wäre. Die Richtung der Reflektion der Reinigungsflüssigkeit wird aber der besseren Verständlichkeit halber vorliegend als die Richtung verstanden, die durch den Einfallswinkel der von der Düse verspritzten Reinigungsflüssigkeit in Bezug auf die Spritzwand und den sich daraus für Partikel ergebenden Ausfallswinkel festgelegt ist. Es wird vorliegend also diesbezüglich vereinfachend so getan, als ob sich die Reinigungsflüssigkeit aus vielen kleinen Partikeln zusammensetzen würde.

Um die Reinigung der Zellen der Transporteinrichtung sowie der Transporteinrichtung selbst zu verbessern, bietet es sich an, wenn die Zellen bodenseitig und/oder kopfseitig offen sind. Letzteres vereinfacht zudem das Zuführen und das Abgeben der Packungen vor und nach dem Füllen. Bodenseitig offene Zellen können das Abgeben der Packungen vereinfachen, indem die Packungen durch einen Packungsausstoßer von unten aus den Zellen ausgestoßen werden. Unabhängig von dem Zuführen und dem Abgeben der Packungen erleichtern kopfseitige und/oder bodenseitige Öffnungen das Eintreten und/oder das Austreten der Reinigungsflüssigkeit in bzw. aus den Zellen. Die von der wenigstens einen Düse verspritzte Reinigungsflüssigkeit gelangt durch die kopfseitige Öffnung problemlos in die Zelle hinein und durch die bodenseitige Öffnung leicht wieder hinaus, um anschließend von der Spritzwand aufgefangen zu werden. Die von der Spritzwand reflektierte und/oder abtropfende Reinigungsflüssigkeit kann zudem von der Rückseite der Zellen durch die bodenseitige Öffnung erneut in die Zellen gelangen und dann aus der kopfseitigen Öffnung aus den Zellen wieder herausströmen. Die Zellen können so von außen nach innen und wieder von innen nach außen gewaschen bzw. gespült werden, und zwar in dieser Reihenfolge, was das Entfernen der Verschmutzungen begünstigt.

Im Falle einer bodenseitigen Öffnung der Zellen bietet es sich an, wenn der Innenseite der Transporteinrichtung ein Packungsausstoßer zugeordnet ist. Um Bauraum zu sparen und einen einfachen Betrieb zu erlauben, kann der Packungsausstoßer im Umlenkbereich der Transporteinrichtung vorgesehen sein. Zum Ausstoßen der Packungen aus den Zellen über den Bodenbereich der Zellen, kann der Packungsausstoßer wenigstens teilweise in die Zellen eindringen, und zwar über die bodenseitige Öffnung. Dabei bietet es sich insbesondere im Zusammenhang mit der Anordnung des Packungsausstoßers im Umlenkbereich der Transporteinrichtung an, wenn der die Packungen ausstoßende Teil des Packungsausstoßers oszillierend geführt ist. Die Ausstoßbewegung des Packungsaustoßers kann so zweckmäßig an die Bewegung der Zellen im Bereich des Packungsausstoßers angepasst werden.

Alternativ oder zusätzlich lässt sich die Reinigung bedarfsweise dadurch verbessern, dass die wenigstens eine Düse die Reinigungsflüssigkeit wenigstens teilweise von unten in die Zellen einspritzt. Dies geschieht der Einfachheit halber beispielsweise von der Kopfseite der Zellen aus, wobei es sich anbietet, dass die Zellen eine kopfseitige Öffnung aufweisen. Es kann aber alternativ oder zusätzlich die wenigstens eine Düse und die wenigstens eine Spritzwand so zueinander ausgerichtet sein, dass die von der Spritzwand reflektierte Reinigungsflüssigkeit die Zellen wenigstens teilweise von oben reinigt. Dabei wird die Reflexion vorzugsweise wie zuvor beschrieben verstanden. Die Reinigung kann in diesem Zusammenhang weiter begünstigt werden, wenn die Zellen dabei von deren Bodenseite gereinigt werden und beispielsweis die Reinigungsflüssigkeit durch eine bodenseitige Öffnung in die Zellen gelangt.

Um viele Packungen in kurzer Zeit füllen zu können, bietet es sich an, wenn die Transporteinrichtung mehrere, vorzugsweise drei, vier, fünf oder sechs, Reihen von, vorzugsweise parallel zueinander, umlaufenden Zellen aufweist. Die in den parallelen Reihen von Zellen transportierten Packungen werden in der Füllmaschinen parallel und zeitgleich sterilisiert, gefüllt und verschlossen. Um auch die Reinigung effizient zu gestalten, kann vorgesehen sein, dass jeder Reihe von Zellen wenigstens eine Düse zugeordnet ist. So kann das Bespritzen einer jeden Zelle gezielt separat über die wenigstens eine zugehörige Düse optimiert oder angepasst werden. Um den konstruktiven Aufwand möglichst gering zu halten, kann alternativ oder zusätzlich auch wenigstens eine Düse vorgesehen sein, die alle parallel angeordneten Zellen bespritzt. Dadurch kann bedarfsweise eine Vor- und/oder Nachreinigung realisiert werden. Grundsätzlich kann auch jeder Reihe von Zellen eine separate Spritzwand zugeordnet sein. Dadurch steigt jedoch die Gefahr einer unerwünschten Verunreinigung sekundärer Anlagenteile. Außerdem wird es im Regelfall konstruktiv einfacher sein, eine einzige Spritzwand für alle Reihen von Zellen gemeinsam vorzusehen. In jedem Fall ist es bevorzugt, dass sich die Winkelbereiche der Düsen im Bereich der Transporteinrichtung und/oder der Zellen einander teilweise überlappen, so dass alle Oberflächen der Transporteinrichtung und/oder der Zellen gereinigt werden können.

Eine weitere konstruktive Vereinfachung bei gleichzeitiger Schonung von Bauraum kann erreicht werden, indem mehrere Düsen mit einem Düsenrohr verbunden sind. Dabei können die Düsen der Einfachheit halber nebeneinander angeordnet und bedarfsweise unterschiedlichen Reihen von Zellen zugeordnet sein. Besonders einfach und platzsparend ist es zudem, wenn das wenigstens eine Düsenrohr wenigstens im Wesentlichen horizontal ausgerichtet ist.

Nachträglich wird die Erfindung anhand einer lediglich Ausführungsbeispiele darstellenden Zeichnung näher erläutert. In der Zeichnung zeigt
- Fig. 1: eine erste erfindungsgemäße Füllmaschine zur Durchführung des erfindungsgemäßen Verfahrens in einer schematischen Seitenansicht,
- Fig. 2: ein Detail der Füllmaschine aus Fig. 1 in einer schematischen Seitenansicht,
- Fig. 3: ein Detail der Füllmaschine aus Fig. 1 in einer schematischen Seitenansicht mit abweichend ausgerichteten Düsen,
- Fig. 4A-C: ein Detail einer zweiten erfindungsgemäßen Füllmaschine in einer schematischen Seitenansicht und in schematischen Schnittansichten entlang der Schnittebenen IVB-IVB und IVC-IVC der Fig. 4A-B und
- Fig. 5: eine Düsenanordnung einer dritten erfindungsgemäßen Füllmaschine in einer Ansicht analog zu Fig. 4C.

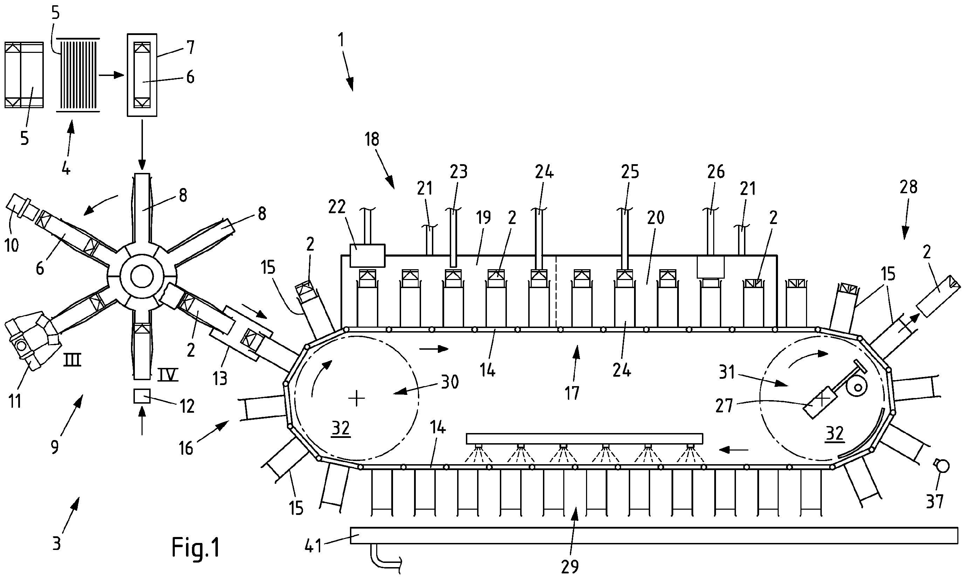

In der Fig. 1 ist eine Füllmaschine 1 zum Füllen von Packungen 2, insbesondere mit fließfähigen Lebensmitteln, dargestellt, die in diesem Falle eine Formvorrichtung 3 zum Formen von den zu füllenden Packungen 2 umfasst. Grundsätzlich ist es aber auch möglich, dass der Füllmaschine bereits zu füllende einseitig offene Packungen 2 zugeführt werden. Die dargestellte und insoweit bevorzugte Füllmaschine 1 weist zudem eine Reihe von parallelen Bearbeitungslinien auf, von denen in der Fig. 1 lediglich eine Bearbeitungslinie dargestellt ist. Jeder Bearbeitungslinie ist ein Bündel 4 von Packungsrohlingen 5 zugeordnet, deren Längsränder aneinander gesiegelt sind und so beidseitig offene Packungsmäntel 6 bilden. Durch eine Übergabeeinrichtung 7 werden die Packungsmäntel 6 aufgefaltet und auf einen Dorn 8 eines Dornrads 9 geschoben.

Das dargestellte und insoweit bevorzugte Dornrad 9 wird zyklisch, also schrittweise, gedreht. Dabei werden die Packungsmäntel 6 in unterschiedlichen Stellungen bearbeitet. Zunächst wird ein Rand mit einer Heizeinheit 10 mit Heißluft erwärmt und anschließend in einer Vorfaltung 11 vorgefaltet, um anschließend den vorgefalteten Rand mit einer Presse 12 zu einem Boden zu siegeln. Es wird so eine einseitig offene und an einem Ende dicht verschlossene Packung 2 erhalten, die von einer Zuführeinrichtung 13 an eine endlos im Kreis geführte Transporteinrichtung 14 übergeben wird. Das Zuführen kann dabei durch einfaches Abstreifen der Packung 2 vom Dorn 8 und Einschieben in eine Zelle 15 erfolgen. Dabei werden die Packungen 2 nacheinander in separate, im Kreis geführte Zellen 15 der Transporteinrichtung 14 eingeführt, die sich jeweils im Zuführbereich 16 der Transporteinrichtung 14 befinden. Bei der dargestellten und insoweit bevorzugten Füllmaschine 1 handelt es sich bei der Transporteinrichtung 14 um eine endlos umlaufende Zellenkette.

Die Packung 2 wird durch die Transporteinrichtung 14 in einem Füllbereich 17 durch eine Aseptikkammer 18 transportiert, die nacheinander in eine Sterilisationszone 19 und eine Füll- und Siegelzone 20 unterteilt ist. Der Transport der Packungen 2 muss nicht geradlinig erfolgen, sondern kann auch in wenigstens einem Bogen oder gar im Kreis erfolgen, je nachdem ob es sich bei der Füllmaschine 1 um einen sogenannten Längsläufer oder einen Rundläufer handelt. Die Aseptikkammer 18 wird über entsprechende Sterilluftanschlüsse 21 mit Sterilluft gespült, um das Eindringen von Keimen zu verhindern.

In die oben offenen Packungen 2 wird zunächst durch eine Vorwärmeinrichtung 22 sterile Heißluft eingeblasen, um die Packungen 2 vorzuwärmen. Anschließend wird in einer Sterilisiereinrichtung 23 ein Sterilisierungsmittel in die Packungen eingeblasen, das in den vorgewärmten Packungen 2 stärker reagiert und weniger kondensiert. Als Sterilisierungsmittel kommt insbesondere Wasserstoffperoxid infrage. Das Wasserstoffperoxid kann zusammen mit Dampf und/oder Luft in die einseitig offene Packung 2 eingeleitet werden. Nach dem Sterilisieren der Packungen 2 wird das Innere der Packungen 2 in einer Trocknungseinrichtung 24 durch Beaufschlagen mit Trocknungsluft getrocknet. Die Trocknungsluft ist dabei vorzugsweise heiß und steril.

Nach dem Übergang von der Sterilisationszone 19 in die Füll- und Siegelzone 20 werden die einseitig offenen Packungen 2 unter einer Fülleinrichtung 25 positioniert und mit einem Lebensmittel gefüllt. Die gefüllten Packungen 2 werden sodann mit einer Verschließeinrichtung 26 durch Falten des oberen offenen Bereichs der Packung 2 und Siegeln desselben verschlossen. Die verschlossenen Packungen 2 werden anschließend über eine Abgabeeinrichtung 27 in einem Abgabebereich 28 der Transporteinrichtung 14 aus den Zellen 15 der Transporteinrichtung 14 abgegeben und sodann bedarfsweise weiter bearbeitet. Die nun leeren Zellen 15 der Transporteinrichtung 14 werden über einen Rückführbereich 29 der Transporteinrichtung 14 weiter in Richtung des Dornrads 9 bewegt, um dort weitere Packungen 2 aufzunehmen. Um die Zellen 15 endlos hin und her transportieren zu können, sind dem Zuführbereich 16 und dem Abgabebereich 28 Umlenkbereiche 30,31 zugeordnet, in denen bei der dargestellten und insoweit bevorzugten Füllmaschine 1 sogenannte Umlenkrollen 32 vorgesehen sind.

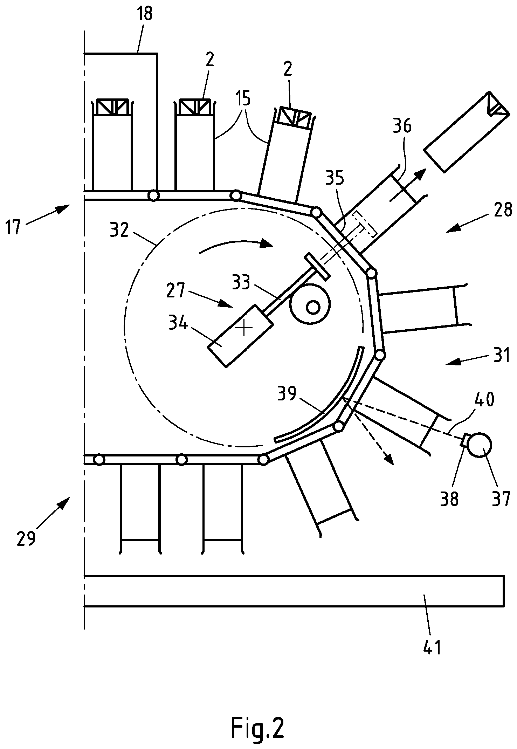

In der Fig. 2 ist ein Detail der Füllmaschine 1 umfassend den hinteren Umlenkbereich 31 dargestellt. Diesem Bereich ist die als Packungsausstoßer ausgebildete Abgabeeinrichtung 27 zugeordnet, die einen Stößel 33 zum Ausstoßen der Packungen 2 aus den Zellen 15 aufweist. Der Stößel 33 wird von einem Antrieb 34 vor und zurück verschoben, während der Stößel 33 oszillierend an einer Führung gehalten ist. So kann der Stößel mit der Transporteinrichtung 14 um einen weiteren Takt bewegt werden. Zum Ausstoßen der Packungen 2 drückt der Stößel 33 von unten durch die bodenseitige Öffnung 35 der Zelle 15, so dass die Packung 2 aus der kopfseitigen Öffnung 36 der Zelle 15 herausgedrückt wird. Lediglich durch die strichpunktierte Linie angedeutet ist die Umlenkrolle 32 dargestellt, welche die Transporteinrichtung 14 umlenkt, so dass die Zellen 15 über den Rückführbereich 29 zurück zum Zuführbereich 16 bewegt werden, wo die Zellen 15 neue Packungen 2 aufnehmen.

Dem unteren Teil des Umlenkbereichs 31 zugeordnet sind ein Düsenrohr 37 mit Düsen 38 und eine Spritzwand 39 in Form eines gebogenen Spritzblechs. Während die Spritzwand 39 auf der Innenseite der Transporteinrichtung 14 vorgesehen ist, sind das Düsenrohr 37 und die Düsen 38 auf der Außenseite der Transporteinrichtung vorgesehen. Die Transporteinrichtung 14 wird dabei mitsamt den Zellen 15 an den Düsen 38 vorbeibewegt. Die Düsen 38 spritzen dabei Reinigungsflüssigkeit 40 gegen die Transporteinrichtung 14 und durch die kopfseitigen Öffnungen 36 in die Zellen 15 hinein, um so die an der Transporteinrichtung 14, insbesondere an den Zellen 15, anhaftenden Verunreinigungen zu lösen und abzuspülen. Teilweise spritzt die Reinigungsflüssigkeit 40 an der Transporteinrichtung 14 vorbei oder durch die bodenseitige Öffnung 35 der Zelle 15 wieder hinaus. Dieser Teil der Reinigungsflüssigkeit 40 wird von der Spritzwand 39 aufgefangen und abgeleitet. Das Ableiten kann dadurch erfolgen, dass die Reinigungsflüssigkeit 40 von der Spritzwand 39 reflektiert wird und/oder nach unten abtropft. Da die Spritzwand 39 nach unten weist und bei der dargestellten und insoweit bevorzugten Füllmaschine 1 konvex, und zwar etwa entsprechend des Krümmungsradius der Transporteinrichtung 14 im Umlenkbereich 31, gekrümmt ist, gelangt die von der Spritzwand 39 abgeleitete Reinigungsflüssigkeit 40 in die unter der Transporteinrichtung 14 angeordnete Bodenwanne 41. Allerdings spült zuvor ein Teil der Reinigungsflüssigkeit 40 die Transporteinrichtung 14 von oben nach unten, wobei ein Teil der Reinigungsflüssigkeit 40 von der Spritzwand 39 durch die bodenseitige Öffnung 35 der Zellen 15 in die Zellen 15 gelangt und dabei die Zellen 15 in Richtung der kopfseitigen Öffnungen 36 ausspült und sodann aus der kopfseitigen Öffnung 36 austritt.

Bei der dargestellten und insoweit bevorzugten Füllmaschine 1 ist die Düse 38 als Schlitzdüse oder Flachstrahldüse ausgebildet, die einen flachen Strahl erzeugt. Zudem ist die Düse 38 so ausgerichtet, dass der längliche Strahl der Reinigungsflüssigkeit 40 leicht nach oben gerichtet ist, und zwar etwa in einem Winkel von 10° zur Horizontalen. Wenn der Strahl der Reinigungsflüssigkeit 40 auf die Spritzwand 39 trifft, wird die Reinigungsflüssigkeit 40 infolge der Neigung der Spritzwand 39 nach unten in Richtung der Bodenwanne 41 abgelenkt, ohne dass der von der Düse 28 kommende Strahl an Reinigungsflüssigkeit 40 gekreuzt wird.

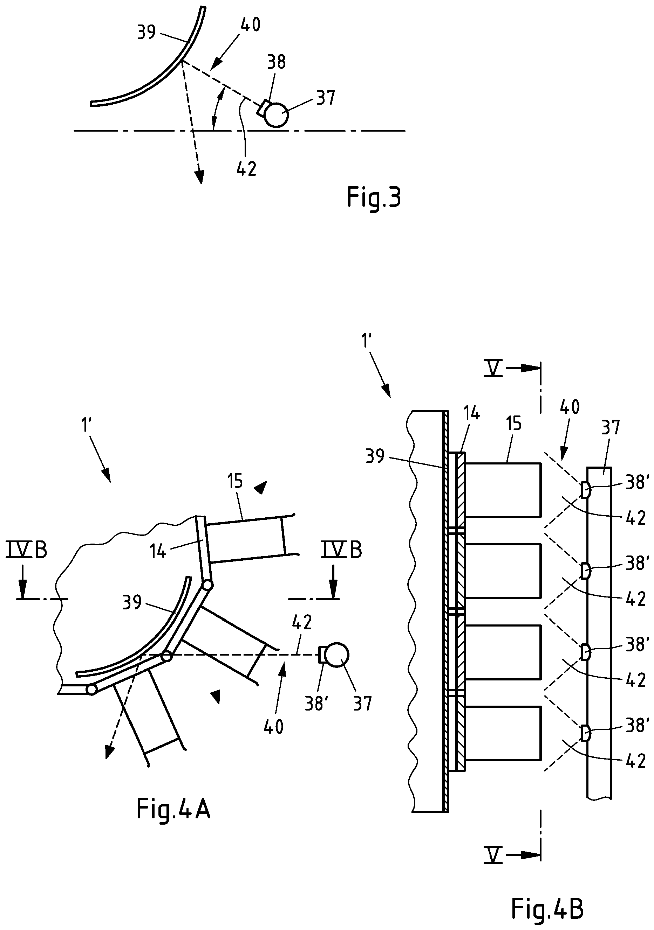

In der Fig. 3 ist eine Anordnung der Düse 38 der Füllmaschine 1 in einer anderen Ausrichtung dargestellt. Bedarfsweise kann die Ausrichtung der Düse 38 einstellbar sein, um je nach Anwendungsfall eine zuverlässige Reinigung der Transporteinrichtung 14 sicherstellen zu können. Der Winkel, in dem die Düse 38 in der Ausrichtung gemäß Fig. 3 die Reinigungsflüssigkeit 40 in Richtung der Spritzwand 39 spritzt, ist etwas steiler, als dies in der Fig. 2 dargestellt ist. Der Winkel beträgt zwischen 20° und 30° zur Horizontalen. Dies führt dazu, dass die von der Düse 38 gegen die Spritzwand 39 gespritzte und von der Spritzwand 39 abprallende Reinigungsflüssigkeit 40 in einem anderen Winkel von der Spritzwand 39 reflektiert wird. Die Reinigungsflüssigkeit 40 wird etwa vertikal von der Spritzwand 39 reflektiert. In etwa in derselben Richtung tropft zudem Reinigungsflüssigkeit 40 von der Spritzwand 39 ab. Die Spritzwand 39 kann so gekrümmt oder geneigt sein, dass das Reinigungswasser 40 wie gewünscht nach unten abgeleitet wird.

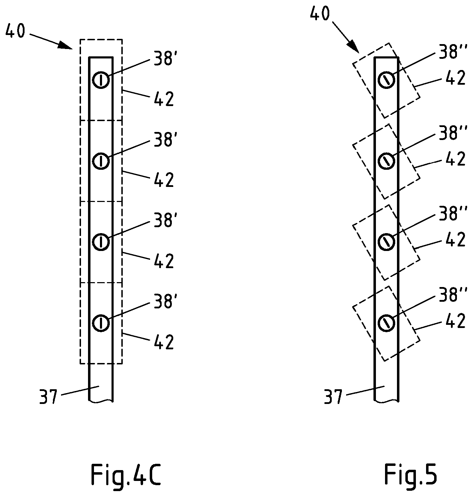

In den Fig. 4A-C ist der zur Reinigung der Transporteinrichtung 14 dargestellte Abschnitt einer anderen Füllmaschine 1' dargestellt. Der Unterschied zu der zuvor beschriebenen Füllmaschine 1 besteht dabei in der insbesondere in der Fig. 4A dargestellten Ausrichtung der Düsen 38'. Die Düsen 38' sind so ausgerichtet, dass der Strahl 42 der Reinigungsflüssigkeit 40 etwa horizontal auf die Transporteinrichtung 14 trifft. Ein Teil des Strahls 42 der Reinigungsflüssigkeit 40 wird daher von der Spritzwand 39 in einem anderen Winkel aber dennoch nach unten abgelenkt bzw. reflektiert. Der nicht reflektierte Teil der Reinigungsflüssigkeit 40 tropft von der Spritzwand 39 oder von der Transporteinrichtung 14 nach unten ab. Mithin wird wenigstens im Wesentlichen die gesamte Reinigungsflüssigkeit 40 in der Bodenwanne 41 gesammelt und abgeleitet. In der Fig. 4B sind die Düsen 38' von oben gesehen dargestellt. Die Füllmaschine 1' weist eine Transporteinrichtung 14 mit vier parallelen Reihen von Zellen 15 auf. Jeder Reihe von Zellen 15 ist eine Düse 38' zugeordnet, wobei die Düsen 38' so angeordnet sind, dass die Transporteinrichtung 14 über die gesamte Breite mit Reinigungsflüssigkeit 40 bespritzt wird. Besonders effektiv ist es dabei, wenn die Strahlen 42 der Düsen 38' ineinander übergehen, ohne einander jedoch nennenswert zu überlagern, wie dies insbesondere in der horizontalen Draufsicht auf die Düsenöffnungen in der Fig. 4C dargestellt ist. Des Weiteren sind die Strahlen 42 der Düsen 38' so ausgerichtet, dass die Strahlen 42 der Düsen 38' in einer gemeinsamen Ebene liegen. Das Düsenrohr 37 verläuft dabei wie diese Ebene horizontal, wobei das Düsenrohr 37 in der durch die Strahlen 42 der Düsen 38' definierten Ebene liegen kann.

Die in der Fig. 5 dargestellte Ausrichtung der Düsen 38" weist von der Anordnung der Düsen 38' gemäß Fig. 4C derart ab, das die Strahlen 42 der Düsen 38" keine gemeinsame Ebene definieren. Die Strahlen 42 sind jeweils um bis zu etwa 30° gegenüber der Horizontalen geneigt, während die Düsen 38" selbst in einer horizontalen Linie nebeneinander entlang des Düsenrohrs 37 angeordnet sind. Als bevorzugt kann insbesondere eine Neigung von zwischen 5° und 20° zur Horizontalen angesehen werden. So werden von dem Strahl 42 an Reinigungsflüssigkeit 40 alle relevanten Flächen der Zellen 15 erreicht, etwa die vorlaufenden und/oder nachlaufenden Flächen der Zellen 15. Zudem weiten sich die Strahlen 42 der Düsen 38" zur Seite gerade so weit auf, dass die Strahlen 42 sich zur Seite nicht oder gerade eben überlappen, um einen übermäßigen Einsatz von Reinigungsflüssigkeit 40 zu vermeiden.

### Bezugszeichenliste

- 1: Füllmaschine
- 2: Packung
- 3: Formvorrichtung
- 4: Bündel
- 5: Packungsrohling
- 6: Packungsmantel
- 7: Übergabeeinrichtung
- 8: Dorn
- 9: Dornrad
- 10: Heizeinheit
- 11: Vorfaltung
- 12: Presse
- 13: Zuführeinrichtung
- 14: Transporteinrichtung
- 15: Zelle
- 16: Zuführbereich
- 17: Füllbereich
- 18: Aseptikkammer
- 19: Sterilisationszone
- 20: Füll- und Siegelzone
- 21: Sterilluftanschluss
- 22: Vorwärmeinrichtung
- 23: Sterilisiereinrichtung
- 24: Trocknungseinrichtung
- 25: Fülleinrichtung
- 26: Verschließeinrichtung
- 27: Abgabeeinrichtung
- 28: Abgabebereich
- 29: Rückführbereich
- 30,31: Umlenkbereich
- 32: Umlenkrolle
- 33: Stößel
- 34: Antrieb
- 35: bodenseitige Öffnung
- 36: kopfseitige Öffnung
- 37: Düsenrohr
- 38: Düse
- 39: Spritzwand
- 40: Rinigungsflüssigkeit
- 41: Bodenwanne
- 42: Strahl

## Patentansprüche

1. Füllmaschine (1,1') zum Füllen von Packungen (2) mit fließfähigen Produkten, mit einer endlos umlaufenden Transporteinrichtung (14) zum Transportieren der Packungen (2) durch die Füllmaschine (1,1') umfassend eine Vielzahl von Zellen (15) zur Aufnahme der Packungen (2), wobei einem Zuführbereich (16) der Transporteinrichtung (14) eine Zuführeinrichtung (13) zum Zuführen von zu füllenden Packungen (2) und einem Abgabebereich (28) der Transporteinrichtung (14) eine Abgabeeinrichtung (27) zum Abgeben der Packungen (2) zugeordnet ist, wobei in der Transportrichtung (14) der Transporteinrichtung (14) zwischen dem Zuführbereich (16) und dem Abgabebereich (28) ein Füllbereich (17) und zwischen dem Abgabebereich (28) und dem Zuführbereich (16) ein Rückführbereich (29) jeweils der Transporteinrichtung (14) vorgesehen ist, wobei dem Rückführbereich (29) der Transporteinrichtung (14) zugeordnet wenigstens eine Düse (38,38') zum Bespritzen der Zellen (15) mit einer Reinigungsflüssigkeit (40) zugeordnet ist und wobei auf der der wenigstens einen Düse (38,38') abgewandten Seite der Transporteinrichtung (14) und der Düse (38,38') gegenüberliegend eine Spritzwand (39) zum Auffangen und Ableiten von von der Düse (38,38') verspritzter und die Zellen (15) passierender Reinigungsflüssigkeit (40) angeordnet ist,
**dadurch gekennzeichnet, dass** die wenigstens eine Düse (38,38') und die wenigstens eine Spritzwand (39) einem Umlenkbereich der Transporteinrichtung (14) zugeordnet sind.

2. Füllmaschine nach Anspruch 1,
**dadurch gekennzeichnet, dass** die wenigstens eine Düse (38,38') zum Verspritzen der Reinigungsflüssigkeit (40) wenigstens teilweise nach oben, vorzugsweise überwiegend horizontal, insbesondere in einem Winkel zwischen 5° und 20° zur Horizontalen, vorgesehen ist und/oder
dass die wenigstens eine Düse (38,38') zum Verspritzen der Reinigungsflüssigkeit (40) in einem Winkel zwischen 5° und 35°, vorzugsweise zwischen 5° und 20°, zur Längserstreckung der Zellen (15) vorgesehen ist.

3. Füllmaschine nach Anspruch 1 oder 2,
**dadurch gekennzeichnet, dass** die Spritzwand (39) wenigstens abschnittsweise als Spritzblech zum Auffangen und Ableiten von Reinigungsflüssigkeit (40) ausgebildet ist, und/oder dass die der Düse (38,38') zugewandte Seite der Spritzwand (39) wenigstens teilweise, vorzugsweise überwiegend, nach unten weist und/oder wenigstens teilweise konvex gekrümmt ist und/oder dass unter der Spritzwand (39), insbesondere unter der Transporteinrichtung (14), eine Bodenwanne zum Auffangen der, insbesondere von der Spritzwand (39) reflektierten und/oder abtropfenden, Reinigungsflüssigkeit (40) vorgesehen ist.

4. Füllmaschine nach Anspruch 3,
**dadurch gekennzeichnet, dass** die Neigung und/oder die Krümmung der der Düse (38,38') zugewandten Seite der Spritzwand (39) und die Spritzrichtung der wenigstens einen Düse (38,38') so aufeinander abgestimmt sind, dass die Reinigungsflüssigkeit (40) wenigstens im Wesentlichen vertikal, vorzugsweise in einem Winkel kleiner als 10°, insbesondere in einem Winkel kleiner als 5°, zur Vertikalen von der Spritzwand (39) reflektiert wird.

5. Füllmaschine nach einem der Ansprüche 1 bis 4,
**dadurch gekennzeichnet, dass** die Zellen (15) bodenseitig und/oder kopfseitig offen sind und, vorzugsweise, dass der Innenseite der Transporteinrichtung (14), vorzugsweise im Umlenkbereich (30,31) der Transporteinrichtung (14), zum Ausstoßen der Packungen (2) aus den Zellen (15) wenigstens eine über den Bodenbereich der Zellen (15) wenigstens teilweise in die Zellen (15) eindringende, vorzugsweise oszillierend geführte, Abgabeeinrichtung (27) vorgesehen ist.

6. Füllmaschine nach einem der Ansprüche 1 bis 5,
**dadurch gekennzeichnet, dass** die wenigstens eine Düse (38,38') derart vorgesehen ist, dass die Reinigungsflüssigkeit (40) wenigstens teilweise von unten, vorzugsweise von der Kopfseite der Zellen (15), in die Zellen (15) eingespritzt wird und/oder dass die wenigstens eine Düse (38,38') und die wenigstens eine Spritzwand (39) derart zueinander ausgerichtet sind, dass die von der Spritzwand (39) reflektierte Reinigungsflüssigkeit (40) die Zellen (15) wenigstens teilweise von oben, vorzugsweise von der Bodenseite der Zellen (15), reinigt, insbesondere in die Zellen (15) gelangt.

7. Füllmaschine nach einem der Ansprüche 1 bis 6,
**dadurch gekennzeichnet, dass** die Transporteinrichtung (14) mehrere, vorzugsweise drei, vier, fünf oder sechs, Reihen von, vorzugsweise parallel zueinander, umlaufender Zellen (15) aufweist und dass, vorzugsweise, jeder Reihe von Zellen (15) wenigstens eine Düse (38,38') und/oder allen Reihen von Zellen (15) eine gemeinsame Spritzwand (39) zugeordnet ist.

8. Füllmaschine nach Anspruch 7,
**dadurch gekennzeichnet, dass** die mehreren Düsen (38,38') mit einem, vorzugsweise wenigstens im Wesentlichen horizontalen, Düsenrohr (37) verbunden sind.

9. Verfahren zum Füllen von Packungen mit fließfähigen Produkten mit einer Füllmaschine (1,1'), vorzugsweise nach einem der Ansprüche 1 bis 8,
- bei dem in einem Zuführbereich zu füllende Packungen (2) in Zellen (15) einer endlos umlaufenden Transporteinrichtung (14) zugeführt werden,
- bei dem die zugeführten Packungen (2) in den Zellen (15) der Transporteinrichtung (14) vom Zuführbereich über einen Füllbereich (17) bis zu einem Abgabebereich (28) transportiert und währenddessen gefüllt werden,
- bei dem die gefüllten Packungen (2) in dem Abgabebereich (28) aus den Zellen (15) der Transporteinrichtung (14) abgegeben werden,
- bei dem die Zellen (15) von dem Abgabebereich (28) in den Zuführbereich (16) zurückgeführt werden,
- bei dem die Zellen (15) im Rückführbereich (29) von wenigstens einer Düse (38,38') mit einer Reinigungsflüssigkeit (40) bespritzt werden,
- bei dem die von der wenigstens einen Düse (38,38') verspritzte und die Zellen (15) passierende Reinigungsflüssigkeit (40) wenigstens teilweise von einer an der wenigstens einen Düse (38,38') abgewandten Seite der Transporteinrichtung (14) vorgesehenen und der Düse (38,38') gegenüberliegenden Spritzwand (39) aufgefangen und abgeleitet wird und
- bei dem die wenigstens eine Düse (38,38') die Zellen (15) eines Umlenkbereichs (31) der Transporteinrichtung (14) bespritzt und die von der Düse (38,38') verspritzte und die Zellen (15) passierende Reinigungsflüssigkeit (40) in einem Umlenkbereich (31) der Transporteinrichtung (14) von der Spritzwand (39) aufgefangen und abgeleitet wird.

10. Verfahren nach Anspruch 9,
- bei dem die wenigstens eine Düse (38,38') die Reinigungsflüssigkeit (40) wenigstens teilweise nach oben, vorzugsweise überwiegend horizontal, insbesondere in einem Winkel von 5° bis 20° zur Horizontalen, gegen die Zellen (15) gespritzt wird und/oder
- bei dem die wenigstens eine Düse (38,38') die Reinigungsflüssigkeit (40) in einem Winkel zwischen 5° und 35°, vorzugsweise zwischen 5° und 20°, zur Längserstreckung der Zellen (15) gegen die Zellen (15) gespritzt wird.

11. Verfahren nach Anspruch 9 oder 10,
- bei dem die Reinigungsflüssigkeit (40) von der Düse (38,38') wenigstens teilweise gegen eine wenigstens abschnittsweise als Spritzblech ausgebildete Spritzwand (39) gespritzt wird und/oder
- bei dem die Reinigungsflüssigkeit (40) von der Düse (38,38') wenigstens teilweise gegen eine wenigstens teilweise, vorzugsweise überwiegend, nach unten weisende und/oder wenigstens teilweise konvex gekrümmte Seite der Spritzwand (39) gespritzt wird und/oder
- bei dem die von der Spritzwand (39) aufgefangene Reinigungsflüssigkeit (40) an eine, insbesondere unter der Transporteinrichtung (14) vorgesehene, Bodenwanne (41) abgeleitet wird.

12. Verfahren nach einem der Ansprüche 9 bis 11,
- bei dem die von der Düse (38,38') gegen die Spritzwand (39) gespritzte Reinigungsflüssigkeit (40) wenigstens im Wesentlichen vertikal, vorzugsweise in einem Winkel kleiner als 10°, insbesondere in einem Winkel kleiner als 5°, zur Vertikalen von der Spritzwand (39) reflektiert wird und/oder
- bei dem, vorzugsweise im Umlenkbereich (31) der Transporteinrichtung (14), die Reinigungsflüssigkeit (40) von der Düse (38,38') von unten in die kopfseitigen Öffnungen (36) der Zellen (15) und von der Spritzwand (39) in die bodenseitigen Öffnungen (35) der Zellen (15) gelangt.

13. Verfahren nach einem der Ansprüche 9 bis 12,
- bei dem die gefüllten Packungen (2), vorzugsweise von der Innenseite der Transporteinrichtung (14), über den Bodenbereich der Zellen (15) aus den Zellen (15) ausgestoßen werden und
- bei dem, vorzugsweise, die Packungen (2) von einer wenigstens teilweise in die Zellen (15) eindringenden, vorzugsweise wenigstens teilweise oszillierenden, Abgabeeinrichtung (27) ausgestoßen werden.

14. Verfahren nach einem der Ansprüche 9 bis 13,
- bei dem die Reinigungsflüssigkeit (40) wenigstens teilweise von unten, vorzugsweise von der Kopfseite der Zellen (15), in die Zellen (15) eingespritzt wird und/oder
- bei dem die die Zellen (15) passierende Reinigungsflüssigkeit (40) von der Spritzwand (39) wenigstens teilweise von oben gegen die Zellen (15), vorzugsweise gegen den Bodenbereich der Zellen (15), reflektiert wird.

15. Verfahren nach einem der Ansprüche 9 bis 14,
- bei dem die Transporteinrichtung (14) mehrere, vorzugsweise drei, vier, fünf oder sechs, Reihen von Zellen (15), vorzugsweise parallel zueinander, umlaufen lässt und
bei dem, vorzugsweise, jede Reihe von Zellen (15) und/oder eine gemeinsame Spritzwand (39) von wenigstens einer Düse (38,38') bespritzt wird.

## Claims

1. Filling machine (1, 1') for filling packages (2) with fluid products, with a continuously circulating transport device (14) for transporting the packages (2) through the filling machine (1, 1') comprising a plurality of cells (15) for receiving the packages (2), wherein a supply device (13) for supplying packages to be filled (2) is assigned to a supply region (16) of the transport device (14) and a discharge device (27) for discharging the packages (2) is assigned to a discharge region (28) of the transport device (14), wherein in the transport direction of the transport device (14) a filling region (17) is provided between the supply region (16) and the discharge region (28) and a return region (29) is provided between the discharge region (28) and the supply region (16) in each case of the transport device (14) and wherein at least one nozzle (38, 38') for spraying the cells (15) with a cleaning fluid (40) is assigned to the return region (29) of the transport device (14) and wherein a splash board (39) for collecting and draining cleaning fluid (40) sprayed by the nozzle (38, 38') and passing the cells (15) is arranged on the side of the transport device (14) facing away from the at least one nozzle (38, 38') and opposite the nozzle (38, 38') **characterised in that**
the at least one nozzle (38, 38') and the at least one splash board (39) are assigned to a deviation region of the transport device (14).

2. Filling machine according to claim 1,
**characterised in that**
the at least one nozzle (38, 38') is provided for spraying the cleaning fluid (40) at least partially upwards, preferably largely horizontally, in particular at an angle of between 5° and 20° to the horizontal and/or
**in that** the at least one nozzle (38, 38') for spraying the cleaning fluid (40) is provided at an angle of between 5° and 35°, preferably of between 5° and 20° to the longitudinal extension of the cells (15).

3. Filling machine according to claim 1 or 2,
**characterised in that**
the splash board (39) is formed at least in sections as a splash guard for collecting and draining cleaning fluid (40) and/or **in that** the side of the splash board (39) facing the nozzle (38, 38') points at least partially, preferably largely downwards and/or is at least partially convexly curved and/or **in that** a tray for collecting the cleaning fluid (40), in particular reflected and/or dripping from the splash board (39) is provided under the splash board (39), in particular under the transport device (14).

4. Filling machine according to claim 3,
**characterised in that**
the inclination and/or the curvature of the side of the splash board (39) facing the nozzle (38, 38') and the spray direction of the at least one nozzle (38, 38') are matched to one another such that the cleaning fluid (40) is reflected at least substantially vertically, preferably at an angle smaller than 10°, in particular at an angle smaller than 5° to the vertical of the splash board (39).

5. Filling machine according to any one of claims 1 to 4,
**characterised in that**
the cells (15) are open at the base side and/or head side and preferably **in that** on the inner side of the transport device (14), preferably in the deviation region (30, 31) of the transport device (14) at least one discharge device (27) is provided penetrating from the base region of the cells (15) at least partially into the cells (15), preferably guided in an oscillating manner, for ejecting the packages (2) from the cells (15).

6. Filling machine according to any one of claims 1 to 5,
**characterised in that**
the at least one nozzle (38, 38') is provided such that the cleaning fluid (40) is sprayed at least partially from below, preferably from the head side of the cells (15) into the cells (15) and/or **in that** the at least one nozzle (38, 38') and the at least one splash board (39) are aligned in relation to one another such that the cleaning fluid (40) reflected by the splash board (39) cleans the cells (15), in particular enters into the cells (15), at least partially from above, preferably from the base side of the cells (15).

7. Filling machine according to any one of claims 1 to 6,
**characterised in that**
the transport device (14) has a plurality of, preferably three, four, five or six rows of circulating cells (15), preferably parallel to one another and **in that**, preferably, at least one nozzle (38, 38') is assigned to each row of cells (15) and/or a common splash board (39) is assigned to all rows of cells (15).

8. Filling machine according to claim 7,
**characterised in that**
the plurality of nozzles (38, 38') are connected to a preferably at least substantially horizontal nozzle pipe (37).

9. Method for filling packages with fluid products with a filling machine (1, 1'), preferably according to any one of claims 1 to 8,
- in the case of which in a supply region packages (2) to be filled are supplied in cells (15) of a continuously circulating transport device (14),
- in the case of which the supplied packages (2) are transported in the cells (15) of the transport device (14) from the supply region via a filling region (17) to a discharge region (28) and are filled at the same time,
- in the case of which the filled packages (2) are discharged in the discharge region (28) from the cells (15) of the transport device (14),
- in the case of which the cells (15) are returned from the discharge region (28) to the supply region (16),
- in the case of which the cells (15) are sprayed in the return region (29) by at least one nozzle (38, 38') with a cleaning fluid (40)
- in the case of which the cleaning fluid (40) sprayed by the at least one nozzle (38, 38') and passing the cells (15) is collected and drained at least partially by a splash board (39) provided on the side of the transport device (14) facing away from the at least one nozzle (38, 38') and opposite the nozzle (38, 38') and
- in the case of which the at least one nozzle (38, 38') sprays the cells (15) in a deviation region (31) of the transport device (14) and the cleaning fluid (40) sprayed by the nozzle (38, 38') and passing the cells (15) is collected and drained in a deviation region (31) of the transport device (14) by the splash board (39).

10. Method according to claim 9,
- in the case of which the at least one nozzle (38, 38') sprays the cleaning fluid (40) at least partially upwards, preferably largely horizontally, in particular at an angle of 5° to 20° to the horizontal against the cells (15) and/or
- in the case of which the at least one nozzle (38, 38') sprays the cleaning fluid (40) at an angle of between 5° and 35°, preferably of between 5° and 20° to the longitudinal extension of the cells (15) against the cells (15).

11. Method according to claim 9 or 10,
- in the case of which the cleaning fluid (40) is sprayed by the nozzle (38, 38') at least partially against a splash board (39) formed at least in sections as a splash guard and/or
- in the case of which the cleaning fluid (40) is sprayed by the nozzle (38, 38') at least partially against a side of the splash board (39) at least partially, preferably largely pointing downwards and/or at least partially convexly curved and/or
- in the case of which the cleaning fluid (40) collected by the splash board (39) is drained to a tray (41) provided in particular below the transport device (14).

12. Method according to any one of claims 9 to 11,
- in the case of which the cleaning fluid (40) sprayed by the nozzle (38, 38') against the splash board (39) is reflected at least substantially vertically, preferably at an angle smaller than 10°, in particular at an angle smaller than 5°, to the vertical of the splash board (39) and/or
- in the case of which, preferably in the deviation region (31) of the transport device (14), the cleaning fluid (40) enters from the nozzle (38, 38') from below into the head side openings (36) of the cells (15) and from the splash board (39) into the base side openings (35) of the cells (15).

13. Method according to any one of claims 9 to 12,
- in the case of which the filled packages (2) are ejected preferably from the inner side of the transport device (14), via the base region of the cells (15) out of the cells (15) and
- in the case of which the packages (2) are preferably ejected from a discharge device (27) penetrating at least partially into the cells (15), preferably at least partially oscillating.

14. Method according to any one of claims 9 to 13,
- in the case of which the cleaning fluid (40) is sprayed into the cells (15) at least partially from below, preferably from the head side of the cells (15) and/or
- in the case of which the cleaning fluid (40) passing the cells (15) is reflected from the splash board (39) at least partially from above against the cells (15), preferably against the base region of the cells (15).

15. Method according to any one of claims 9 to 14,
- in the case of which the transport device (14) lets a plurality of, preferably three, four, five or six rows of cells (15) circulate preferably parallel to one another and
- in the case of which each row of cells (15) and/or a common splash board (39) is sprayed by at least one nozzle (38, 38').

## Revendications

1. Machine de remplissage (1, 1') destinée au remplissage d'emballages (2) avec des produits coulants, avec un dispositif de transport (14) circulant en continu pour transporter les emballages (2) à travers la machine de remplissage (1, 1') comprenant une pluralité de cellules (15) pour recevoir les emballages (2), un dispositif d'alimentation (13) étant associé à une zone d'alimentation (16) du dispositif de transport (14) pour alimenter des emballages à remplir (2) et un dispositif de distribution (27) étant associé à une zone de distribution (28) du dispositif de transport (14) pour distribuer les emballages (2), le dispositif de transport (14) étant respectivement pourvu d'une zone de remplissage (17) dans la direction de transport (14) du dispositif de transport (14), entre la zone d'alimentation (16) et la zone de distribution (28), et d'une zone de retour (29) entre la zone de distribution (28) et la zone d'alimentation (16), et au moins une buse (38, 38') étant associée à la zone de retour (29) du dispositif de transport (14) pour injecter un liquide de nettoyage (40) aux cellules (15), et sur le côté du dispositif de transport (14), opposé à l'au moins une buse (38, 38') et faisant face à la buse (38, 38'), une paroi d'injection (39) étant disposée pour recueillir et pour évacuer le liquide de nettoyage (40) injecté par la buse (38, 38') et passant par les cellules (15) **caractérisée en ce que**
l'au moins une buse (38, 38') et l'au moins une paroi d'injection (39) sont associées à une zone de déviation du dispositif de transport (14).

2. Machine de remplissage selon la revendication 1,
**caractérisée en ce que**
l'on prévoit l'au moins une buse (38, 38') pour injecter le liquide de nettoyage (40), au moins partiellement, vers le haut, de préférence principalement horizontalement, notamment selon un angle compris entre 5° et 20° par rapport à l'horizontale, et/ou l'on prévoit l'au moins une buse (38, 38') pour injecter le liquide de nettoyage (40) selon un angle compris entre 5° et 35°, de préférence entre 5° et 20°, par rapport à l'extension longitudinale des cellules (15).

3. Machine de remplissage selon la revendication 1 ou 2,
**caractérisée en ce que**
la paroi d'injection (39) est conçue au moins partiellement en tant que protection contre les projections pour recueillir et évacuer le liquide de nettoyage (40) et/ou **en ce que** le côté de la paroi d'injection (39) orienté vers la buse (38, 38') est dirigé au moins partiellement, de préférence principalement, vers le bas et/ou est au moins partiellement incurvé de façon convexe et/ou **en ce que** l'on prévoit sous la paroi d'injection (39), notamment sous le dispositif de transport (14), une cuvette de fond pour recueillir le liquide de nettoyage (40), notamment réfléchi et/ou s'écoulant par la paroi d'injection (39).

4. Machine de remplissage selon la revendication 3,
**caractérisée en ce que**
l'inclinaison et/ou la courbure du côté de la paroi d'injection (39) orienté vers la buse (38, 38') et la direction d'injection de l'au moins une buse (38, 38') sont adaptées l'une à l'autre de telle sorte que le liquide de nettoyage (40) est réfléchi par la paroi d'injection (39), au moins essentiellement verticalement, de préférence selon un angle inférieur à 10°, notamment selon un angle inférieur à 5° par rapport à la verticale.

5. Machine de remplissage selon l'une des revendications 1 à 4,
**caractérisée en ce que**
les cellules (15) sont ouvertes sur le côté inférieur et/ou sur le côté supérieur et, de préférence, **en ce que** l'on prévoit sur le côté intérieur du dispositif de transport (14), de préférence dans la zone de déviation (30, 31) du dispositif de transport (14), pour décharger les emballages (2) des cellules (15), au moins un dispositif de distribution (27) qui pénètre au moins partiellement dans les cellules (15) par la zone inférieure des cellules (15), et qui est, de préférence, guidé de manière oscillante.

6. Machine de remplissage selon l'une des revendications 1 à 5,
**caractérisée en ce que**
l'on prévoit l'au moins une buse (38, 38') de telle sorte que le liquide de nettoyage (40) est injecté dans les cellules (15), au moins partiellement, par le bas, de préférence par le côté supérieur des cellules (15), et/ou **en ce que** l'au moins une buse (38, 38') et l'au moins une paroi d'injection (39) sont orientées de telle manière l'une par rapport à l'autre que le liquide de nettoyage (40) réfléchi par la paroi d'injection (39) nettoie les cellules (15), au moins partiellement par le haut, de préférence par le côté inférieur des cellules (15), notamment parvient dans les cellules (15).

7. Machine de remplissage selon l'une des revendications 1 à 6,
**caractérisée en ce que**
le dispositif de transport (14) présente plusieurs, de préférence trois, quatre, cinq ou six rangées de cellules (15) circulant de préférence parallèlement l'une à l'autre et **en ce que**, de préférence, au moins une buse (38, 38') est associée à chaque rangée de cellules (15) et/ou une paroi d'injection (39) commune est associée à toutes les rangées de cellules (15).

8. Machine de remplissage selon la revendication 7,
**caractérisée en ce que**
les multiples buses (38, 38') sont reliées à un tube de buse (37) qui est, de préférence, au moins essentiellement horizontal.

9. Procédé de remplissage d'emballages avec des produits coulants avec une machine de remplissage (1,1'), de préférence selon l'une des revendications de 1 à 8,
- dans lequel, dans une zone d'alimentation, des emballages (2) à remplir sont alimentés vers des cellules (15) d'un dispositif de transport (14) circulant sans fin,
- dans lequel les emballages (2) alimentés sont transportés dans les cellules (15) du dispositif de transport (14) depuis la zone d'alimentation en passant par une zone de remplissage (17) jusqu'à une zone de distribution (28), tout en étant en même temps remplis,
- dans lequel les emballages (2) remplis sont distribués dans la zone de distribution (28) à partir des cellules (15) du dispositif de transport (14),
- dans lequel les cellules (15) retournent de la zone de distribution (28) à la zone d'alimentation (16),
- dans lequel un liquide de nettoyage (40) est injecté par l'au moins une buse (38, 38') dans les cellules (15) dans la zone de retour (29),
- dans lequel le liquide de nettoyage (40) injecté par l'au moins une buse (38, 38') et passant dans les cellules (15) est, au moins partiellement, recueilli et évacué par une paroi d'injection (39) prévue sur le côté du dispositif de transport (14) opposé à l'au moins une buse (38, 38') et faisant face à la buse (38, 38'), et
- dans lequel l'au moins une buse (38, 38') injecte les cellules (15) d'une zone de déviation (31) du dispositif de transport (14) et le liquide de nettoyage (40) injecté par la buse (38, 38') et passant dans les cellules (15) est recueilli et évacué par la paroi d'injection (39) dans une zone de déviation (31) du dispositif de transport (14).

10. Procédé selon la revendication 9,
- dans lequel l'au moins une buse (38, 38') injecte le liquide de nettoyage (40) contre les cellules (15), au moins partiellement vers le haut, de préférence essentiellement horizontalement, notamment selon un angle de 5° à 20° par rapport à l'horizontale, et/ou
- dans lequel l'au moins une buse (38, 38') injecte le liquide de nettoyage (40) contre les cellules (15) selon un angle compris entre 5° et 35°, de préférence entre 5° et 20°, par rapport à l'extension longitudinale des cellules (15).

11. Procédé selon la revendication 9 ou 10,
- dans lequel le liquide de nettoyage (40) est injecté par la buse (38, 38'), au moins partiellement, contre une paroi d'injection (39) qui est conçue, au moins partiellement, sous forme de protection contre les projections et/ou
- dans lequel le liquide de nettoyage (40) est injecté par la buse (38, 38'), au moins partiellement, contre un côté de la paroi d'injection (39) dirigé, au moins partiellement, de préférence principalement, vers le bas et/ou au moins partiellement incurvé de façon convexe et/ou
- dans lequel le liquide de nettoyage (40) recueilli par la paroi d'injection (39) est évacué vers une cuvette de fond (41) prévue notamment sous le dispositif de transport (14).

12. Procédé selon l'une des revendications 9 à 11,
- dans lequel le liquide de nettoyage (40) injecté par la buse (38, 38') contre la paroi d'injection (39) est réfléchi par la paroi d'injection (39) au moins essentiellement verticalement, de préférence selon un angle inférieur à 10°, notamment selon un angle inférieur à 5°, par rapport à la verticale et/ou
- dans lequel, de préférence dans la zone de déviation (31) du dispositif de transport (14), le liquide de nettoyage (40) parvient, de la buse (38, 38'), depuis le bas, dans les ouvertures (36) des cellules (15) côté supérieur et de la paroi d'injection (39) dans les ouvertures (35) des cellules (15) côté inférieur.

13. Procédé selon l'une des revendications 9 à 12,
- dans lequel les emballages (2) remplis sont déchargés des cellules (15), de préférence depuis l'intérieur du dispositif de transport (14), par la zone inférieure des cellules (15), et
- dans lequel, de préférence, les emballages (2) sont déchargés par un dispositif de distribution (27) pénétrant au moins partiellement dans les cellules (15), de préférence au moins partiellement de manière oscillante.

14. Procédé selon l'une des revendications 9 à 13,
- dans lequel le liquide de nettoyage (40) est injecté dans les cellules (15), au moins partiellement, par le bas, de préférence par le côté supérieur des cellules (15), et/ou
- dans lequel le liquide de nettoyage (40) passant dans les cellules (15) est réfléchi par la paroi d'injection (39), au moins partiellement par le haut, contre les cellules (15), de préférence contre la zone inférieure des cellules (15).

15. Procédé selon l'une des revendications 9 à 14,
- dans lequel le dispositif de transport (14) laisse circuler plusieurs, de préférence trois, quatre, cinq ou six, rangées de cellules (15), de préférence parallèlement l'une par rapport à l'autre, et
- dans lequel, de préférence, chaque rangée de cellules (15) et/ou une paroi d'injection (39) commune est injectée par au moins une buse (38, 38').
